Europäisches Patentamt

European Patent Office

Office européen des brevets

(19)

(11) **EP 1 191 414 B1**

(12) **EUROPÄISCHE PATENTSCHRIFT**

(45) Veröffentlichungstag und Bekanntmachung des Hinweises auf die Patenterteilung:
**03.05.2006 Patentblatt 2006/18**

(51) Int Cl.:
*G05B 19/418* (2006.01)   *G06Q 10/00* (2006.01)

(21) Anmeldenummer: **01119448.7**

(22) Anmeldetag: **13.08.2001**

(54) **System und Verfahren zur zentralen Bestandsverwaltung**

System and method for central stock management

Système et méthode de gestion centrale de stock

(84) Benannte Vertragsstaaten:
**DE ES FR GB IT**

(30) Priorität: **22.08.2000 JP 2000250452**

(43) Veröffentlichungstag der Anmeldung:
**27.03.2002 Patentblatt 2002/13**

(73) Patentinhaber: **Volkswagen Aktiengesellschaft
38436 Wolfsburg (DE)**

(72) Erfinder: **Ower, Iain
Brafield on the Green NN7 1BL (GB)**

(56) Entgegenhaltungen:
**WO-A-99/14698          US-A- 5 712 989
US-A- 5 765 143**

**Beschreibung**

Die Erfindung betrifft ein Verfahren und eine Vorrichtung zur zentralen Belieferungssteuerung von technischen Produkten mit langen Lieferzeiten von ihrer Herstellungsstätte zu den abnehmenden Händlern mittels eines Datennetzwerkes mit mindestens einer zentralen Datenbank, wobei jedem Händler mindestens ein Rechner zur Datenabfrage zentralverwalteter Daten der Datenbank eines ihm zugeordneten Importeuers und/oder Herstellers zugeordnet ist, sowie ein entsprechendes Computerprogramm.

Es sind bereits einige Verfahren zum Management der physischen Verteilung von Produkten bekannt. Das Management der physischen Verteilung ist zur Erhöhung der Effizienz des Produktvertriebes, zur Reduzierung der Transport- und Lagerungs-Kosten und zur Erhöhung der Kundenzufriedenheit durch eine schnelle Produktlieferung wichtig.

Befinden sich die Produktionsstätte und die Verbrauchsorte in derselben Region, ist das Management der physischen Verteilung relativ einfach zu realisieren. Befindet sich jedoch die Produktionsstätte in Übersee, braucht der Transport der Produkte sehr lange Zeit, und es ist deshalb ein effizientes Management der physischen Verteilung nicht einfach zu realisieren. Insbesondere ein Schiffstransport benötigt etwa einen Monat. Die Transportdauer ist zwar als Faktor nicht so entscheidend wie die Produktakzeptanz, die Produktionskapazität oder die Verkaufsstrategie, dies ist jedoch ein wichtiger Punkt bei dem Wettbewerb um Marktanteile, insbesondere auf einem fast gesättigten Markt.

Aus der US 5,765,143 ist weiterhin ein Warenbestandskontrollsystem, insbesondere für Fahrzeugersatzteile bekannt, welches einen mit einer Software programmierten Computer zum Generieren von Bestelldaten als Reaktion auf Referenzdaten umfasst. Die Referenzdaten können dabei beispielsweise Kenndaten bezüglich der Verkäufe, des Warenbestands, der Demographie oder des Absatzgebietes von mindestens zwei Anbietern auf der gleichen Ebene eines Teilevertriebswegs sein. Die Bestelldaten können dabei beispielsweise eine oder mehrere Transaktionen zur Vergrößerung des Warenbestands oder eine durch den Anbieter empfohlene Bevorratungshöhe für eines oder mehrere Teile sein. Der Computer, der die Bestelldaten generiert, ist bevorzugt zum Generieren der Bestelldaten mittels der Verarbeitung von Vorhersagedaten programmiert, welche durch das Verarbeiten der Referenzdaten generiert werden.

Der Erfindung liegt daher das technische Problem zugrunde, ein Verfahren und eine Vorrichtung zur zentralen Belieferungssteuerung von Produkten mit langen Lieferzeiten von ihrer Herstellungsstätte zu den abnehmenden Händlern zu schaffen, mittels derer eine unnötige Abnutzung und ein ungewollter Verschleiß, die unweigerlich auftreten, wenn die Produkte über längere Zeit gelagert werden, möglichst gering gehalten werden kann, und mittels derer flexibler und bedarfsgerechter die einzelnen Händler mit den Produkten belieferbar sind.

Die Lösung des technischen Problems ergibt sich durch die Gegenstände mit den Merkmalen der Patentansprüche 1, 10 und 11. Weitere vorteilhafte Ausgestaltungen der Erfindung ergeben sich aus den Unteransprüchen.

Hierzu umfasst das Verfahren:

- einen Sortierschritt, bei dem der Gesamtbestand an den technischen Produkten in Bestände unterteilt wird, welche nach ihrer Zugehörigkeit zu jeweils einem von mindestens zwei fertigungsspezifischen Prozessabschnitten kategorisiert sind,
- einen Zuteilungsschritt, bei dem den einzelnen Händlern und/oder Importeuren die nach fertigungsspezifischen Prozessabschnitten kategorisierten Bestände zugeteilt werden, wobei die zugeteilten Bestände in freie Bestände, für deren Akquirieren keine Verhandlung notwendig ist, nicht freie Bestände, für deren Akuirieren eine Verhandlung benötigt wird, und bereits Endkunden zugeordnete Bestände unterteilt sind,
- eine Suchabfrage nach einem gewünschten technischen Produkt durch einen Händler über seinen Rechner, wobei sich die Suche auf die folgenden Bestände erstreckt:

    - freie und nicht freie Bestände, die jeweils noch keinem Endkunden zugeordnet sind,
    - freie Bestände, die noch keinem Händler zugeordnet sind,
    - freie Bestände, die noch einem anderen Händler zugeordnet sind, aber ohne Verhandlung akquiriert werden können und
    - nicht freie Bestände, die noch einem anderen Händler zugeordnet sind, aber nur nach Verhandlung akquiriert werden können;
    - wobei die Reihenfolge der Suchabfrage in den einzelnen Beständen von Zusatzbedingungen abhängig gemacht werden kann, die der Händler und/oder das System vorgeben und

- Akquirieren eines gefundenen technischen Produktes durch den Händler, wobei das akquirierte technische Produkt aus seinem ursprünglich zugeordneten Bestand in den Bestand des Händlers umgruppiert wird und für den Fall der Zuordnung eines Endkunden für die anderen Händler nicht mehr im System sichtbar ist.

Das Verfahren ermöglicht eine sehr flexible und bedarfsgerechte Belieferung der einzelnen Händler, ohne einzelne Händler zu benachteiligen. Dabei wird ausgenutzt, dass aufgrund der langen Lieferzeiten eine flexible und bedarfsgerechte Belieferungssteuerung nur durch eine flexible Umverteilung der bereits vorhandenen Bestände möglich ist. Hierzu kann der einzelne Händler nicht nur auf seine eigenen Bestände zurückgreifen, sondern auch auf die Bestände des Importeurs, sowie anderer Händler. Um nun jedoch den einzelnen Händler nicht zu benachteiligen, sind die Bestände jedes Händlers in freie und nicht freie Bestände unterteilt. Hierdurch wird verhindert, dass aggressive Händler anderen Händlern die Produkte unbegrenzt entziehen können. Ein weiterer wichtiger Aspekt ist, dass aufgrund der Unterteilung der Bestände in Abhängigkeit von Produktionsabschnitten eine größere Transparenz hinsichtlich der möglichen Lieferzeiten besteht. Es versteht sich, dass das Verfahren auch auf unterschiedliche Importeure angewendet werden kann, wobei dann die einzelnen Importeure als Händler aufzufassen sind. Im nachfolgenden soll jedoch von einer Struktur mit einem Hersteller, einem Importeur und vielen Händlern ausgegangen werden, ohne darauf das Verfahren zu beschränken.

In einer bevorzugten Ausführungsform ist ein weiterer Verfahrensschritt vorgesehen, bei dem nach einer vorgebbaren Zeit nicht freie Bestände eines Händlers in freie Bestände geändert werden. Hierdurch soll sichergestellt werden, dass ein Händler nicht unbegrenzt Bestände sperren kann, er jedoch eine geschützte Zeit zur Vermarktung seiner ihm zugeordneten Produkte hat.

In einer weiteren bevorzugten Ausführungsform wird das akquirierte Produkt zu den nicht freien Beständen des Händlers zugeordnet, falls noch keine Kundenzuordnung erfolgt ist und das Produkt aus den nicht freien Beständen eines anderen Händlers stammt. Hierdurch wird sichergestellt, dass ein einzelner Händler freie Bestände nicht für sich sperren kann, ohne für diese einen Kunden zu haben. Andererseits soll der Händler bei einer erfolgreichen Verhandlung mit einem anderen Händler noch die auf dem Produkt liegende Schutzperiode ausnutzen können.

Die Unterteilung der Bestände erfolgt vorzugsweise in Bestände vor Produktfertigstellung und Bestände nach Produktfertigstellung. Die Produktfertigstellung kann dabei über das Ende der Montage, die Rechnungsstellung, über die Verladung auf Schiff, Zug oder Transporter beim Hersteller oder als Ankunft auf dem Umschlagplatz des Importeurs definiert werden.

In einer weiteren bevorzugten Ausführungsform wird jedem Händler in jedem Prozessabschnitt eine Minimum-Quote und eine Maximum-Quote zugeordnet.

In einer weiteren bevorzugten Ausführungsform wird in jedem Suchabschnitt zunächst das älteste Produkt in den Beständen gesucht, wenn keine abweichenden Zusatzbedingungen eingegeben werden, wobei vorzugsweise zunächst die freien Bestände durchsucht werden. Hierdurch wird eine Überalterung der Produkte in den Beständen verhindert. Allerdings kann es im Einzelfall notwendig sein, aufgrund von Kundenwünschen beispielsweise in Bezug auf Lieferzeiten von diesem Suchschema abzuweichen, so dass dann vorzugsweise nach der schnellst möglichen Verfügbarkeit gesucht wird. Um die Akquirierung zu vereinfachen, wird vorzugsweise zunächst in den freien Beständen gesucht, wo keine Verhandlungen mit anderen Händlern notwendig sind.

In einer weiteren bevorzugten Ausführungsform schließt sich nach einer erfolglosen Suche in den Beständen ein Produktionsbestellungsschritt an, wo der einzelne Händler das gewünschte Produkt beim Hersteller in Auftrag geben kann.

In einer weiteren bevorzugten Ausführungsform werden die Bestände aus Sicht eines Händlers wie folgt unterteilt:

- eigene Bestände vor Produktfertigstellung,
- freie Bestände des Importeurs vor Produktfertigstellung (freie Bestände),
- nicht freie Bestände anderer Händler vor Produktfertigstellung (nicht freie Bestände),
- eigene Bestände nach Produktfertigstellung,
- freie Bestände, die Bestände des Importeurs nach Produktfertigstellung umfassen,
- nicht freie Bestände, die Bestände anderer Händler nach Produktfertigstellung umfassen,
- freie Bestände anderer Händler nach Produktfertigstellung ,
- gesperrte Bestände, die bereits eine Kundenzuordnung haben.

In einer weiteren bevorzugten Ausführungsform werden nach einer vorgegebenen Zeit die Maximum-Quoten der Nach-Produktfertigstellungs-Quoten der einzelnen Händler aufgelöst. Die Maximum-Quote dient dabei zunächst zum Schutz der anderen Händler, um zunächst eine faire Verteilung der Bestände zu gewährleisten. Nutzen hingegen einzelne Händler ihre Quoten nicht aus, so soll den Händlern in angemessener Zeit die Möglichkeit weiterer Akquirierung gegeben werden.

Die erfindungsgmäße Vorrichtung umfasst eine Datennetzwerk mit mindestens einer zentralen Datenbank, wobei jedem Händler ein Rechner zur Abfrage der zentralverwalteten Daten der Datenbank zugeordnet ist, wobei in der Datenbank der Gesamtbestand an den technischen Produkten in Bestände unterteilt ist, welche nach ihrer Zugehörigkeit zu jeweils einem von mindestens zwei fertigungsspezifischen Prozesschritten kategorisiert sind, und den einzelnen Importeuren und/oder Händlern Bestände zugeordnet sind. Die einzelnen jeweils zugeordneten Bestände sind jeweils in freie Bestände, für deren Akquirieren keine Verhandlung notwendig ist, in nicht freie Bestände, für deren Akquirieren eine Verhandlung benötigt wird, und in Endkunden zugeordnete Bestände unterteilt. Mittels der den Händlern zugeordneten Rechner ist eine Suchabfrage nach einem gewünschten technischen Produkt durch einen Händler und/ oder Importeur in der zentralen Datenbank veranlassbar, wobei sich die Suche auf die folgenden Lagerbestände erstreckt:

- freie und nicht freie Bestände, die jeweils noch keinem Endkunden zugeordnet sind,
- freie Bestände, die noch keinem Händler zugeordnet sind,
- freie Bestände, die noch einem anderen Händler zugeordnet sind, aber ohne Verhandlung reserviert werden können und
- nicht freie Bestände, die noch einem anderen Händler zugeordnet sind, aber nur nach Verhandlung mit diesem Händler reserviert werden können,
- wobei die Reihenfolge der Suchabfrage in den einzelnen Beständen von Zusatzbedingungen abhängiggemacht werden kann, die durch den Händler und/oder die Vorrichtung vorgebbar sind, und ein gefundenes technisches Produkt für den Händler akquirierbar ist, in dessen Zuteilung umbuchbar und für den Fall der Zuordnung eines Endkunden für die anderen Händler nicht mehr im System sichtbar ist.

Das erfindungsgemäße Computerprogramm weist Programmcode-Mittel auf, um alle Schritte von jedem beliebigen der Verfahrensansprüche durchzuführen, wenn das Programm auf einem Computer ausgeführt wird.

Die Erfindung wird nachfolgend anhand eines bevorzugten Ausführungsbeispieles näher erläutert. Die Fig. zeigen:

Fig. 1 ein schematisches Blockschaltbild einer Vorrichtung zur zentralen Belieferungssteuerung,
Fig. 2 ein Blockdiagramm der Vorrichtung bzw. des Verfahrens zur zentralen Belieferungssteuerung,
Fig. 3 a-c ein Ablaufdiagramm der zentralen Belieferungssteuerung,
Fig.4 eine Bildschirmdarstellung der Quoten eines Händlers,
Fig.5 eine Bildschirmdarstellung der Fahrzeugbewegungen eines Händlers,
Fig.6 eine Bildschirmdarstellung der Quoten aller Händler und
Fig.7 eine Bildschirmdarstellung der Fahrzeugbewegungen aller Händler.

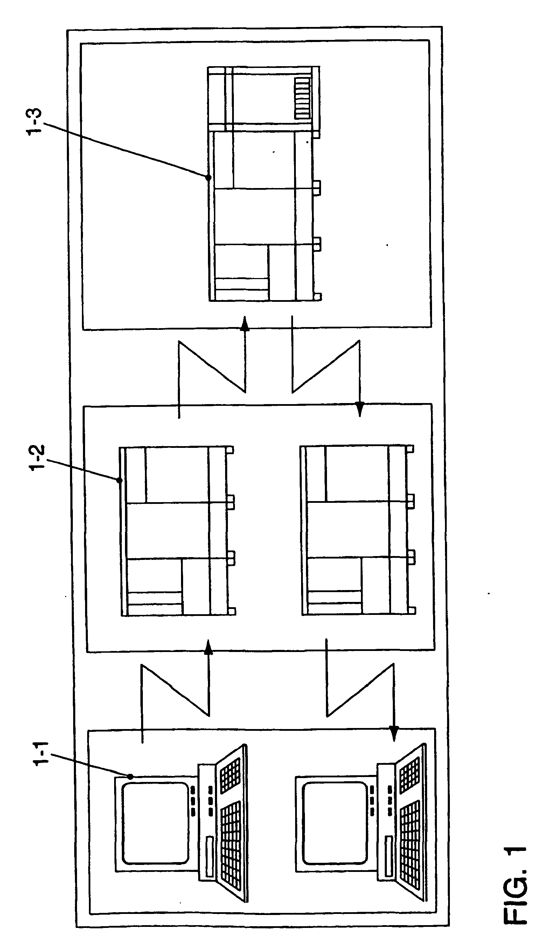

In der Fig. 1 ist ein schematisches Blockschaltbild einer Vorrichtung zur zentralen Belieferungssteuerung dargestellt. Die Vorrichtung 1 umfasst eine Vielzahl von Rechnern 1-1, die jeweils einem Händler zugeordnet sind, wobei aus Übersichtsgründen nur ein Rechner 1-1 dargestellt ist. Des weiteren umfasst die Vorrichtung einen Rechner 1-2 eines Importeurs und einen Rechner 1-3 des Herstellers, der sich beispielsweise in Übersee befindet. Die Vorrichtung verwaltet die Gesamtbestände zwischen der Produktionsstätte und dem Händler, obwohl die Produktionsstätte sich in Übersee befindet und eine lange Transportdauer, d.h. bis zur Ankunft der Produkte auf dem nationalen Markt, benötigt wird. Die Vorrichtung verwaltet nicht nur die Fahrzeuge, die sich in der Produktion befinden, sondern auch die Fahrzeuge auf den Schiffen, die nationalen Beständen sowie die Bestände der Händler. Wie aus der Fig. 1 ersichtlich ist, wird eine Produktionsbestellung, die von einem Händler über den Rechner 1-1 getätigt wird, über den Rechner 1-2 der nationalen Niederlassung des Herstellers zu dem Rechner 1-3 der Zentrale bzw. der Produktionsstätte des Herstellers geschickt. Informationen, die in den Rechner 1-3 der Zentrale bzw. der Produktionsstätte des Herstellers eingegeben werden, können auch zu dem Rechner 1-1 der Händler geschickt werden. Die zentrale Bestandsverwaltung, Quotierung und Blieferungssteuerung erfolgt dabei vorzugsweise über den Rechner 1-2 des Importeurs. Der Rechner 1-2 des Importeurs bietet sich insbesondere aus den folgenden Gründen als Zentrale an. Erstens werden ohnehin vorzugsweise alle Händlerbestände zentral durch den Importeur physikalisch gelagert und verwaltet. Des weiteren bestehen üblicherweise zwischen den Händlern und dem Hersteller keine direkten Verträge, sondern die Händler haben einen Vertrag mit dem Importeur und der Importeur hat einen Vertrag mit dem Hersteller. Ein weiterer Punkt ist, dass der Importeur für die Einhaltung der Quoten seiner Händler verantwortlich ist.

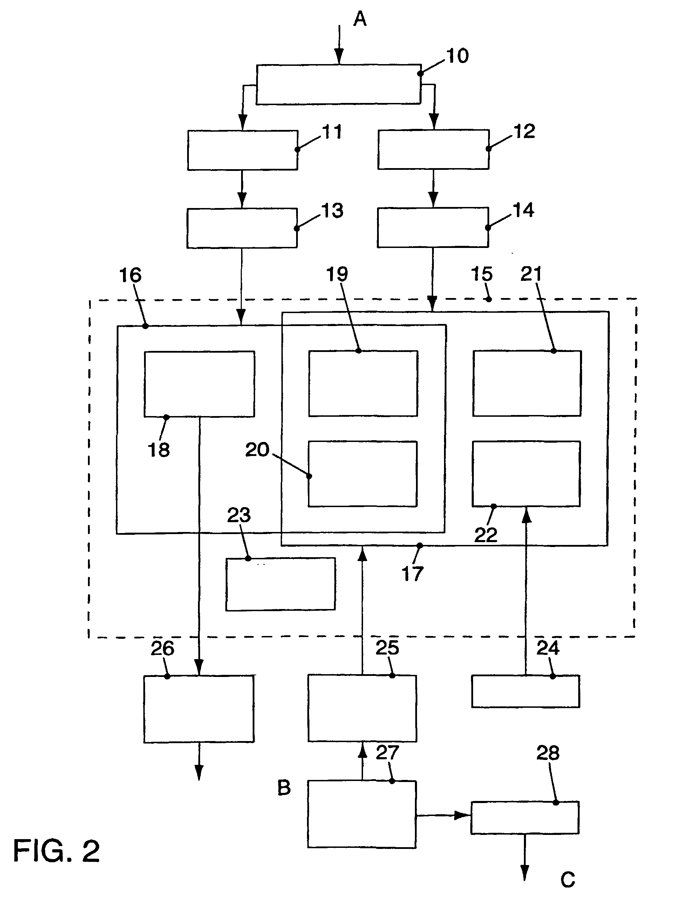

In der Fig. 2 ist ein Blockdiagramm der Vorrichtung zur zentralen Bestandsverwaltung und Belieferungssteuerung dargestellt. Bei der "Berechnung der Zuteilungsquote" 10 wird abhängig von dem Jahresverkaufsziel A die jeweilige Zuteilungsquote 10 eines Händlers berechnet. Der einzelne Händler bekommt dadurch einen eigenen Handlungsspielraum, wie später noch näher erläutert wird. Die Zuteilungsquote 10 wird in eine "Vor-Produktfertigstellungs-Quote" 11 und eine "Nach-Produktfertigstellungs-Quote" 12 unterteilt. Die "Vor-Produktfertigstellungs-Quote" 11 und die "Nach-Produktfertigstellungs-Quote" 12 stellen Beschränkungen für die Händler bei der Suche aus den Beständen und bei der Akquirierung eines Fahrzeuges aus den Beständen dar. Den Hauptanteil der "Vor-Produktfertigstellungs-Quote" 11 stellen Produktionsbestellungen der Händler dar, die bei der Produktionsstätte geordert werden. Die "Nach-Produktfertigstellungs-Quote" 12 ist die Quote aller Bestände nach Produktfertigstellung, wobei die Produktionsfertigstellung entweder als Ende der Montage, als Verladung auf ein Schiff oder als Ankunft auf dem Umschlagplatz des Importeurs definiert wird.

Bevor das Blockdiagramm in Fig. 2 weiter erläutert wird, soll zunächst die Festlegung des Jahresverkaufziels A und die "Berechnung der Zuteilungsquote" 10 näher erläutert werden. Die Importeure legen in einem individuellen Prozess den Marktbedarf fest, den sie weitermelden an den Hersteller. Dieser hält die verfügbaren Produktionskapazitäten dagegen. In einem Prozess basierend auf zahlreichen Gesprächen und Gremiensitzungen wird zwischen Importeuren und Hersteller ein Produktionsprogramm festgelegt. Diese nehmen die Importeure zur Basis, um die Jahresverkaufsziele A mit den Händlern abzuschließen. Dieser Prozess findet revolvierend statt, um gegebenenfalls Anpassungen an den Markt vornehmen zu können. Dazu ist es notwendig, dass die Situation der Auftragseingänge von den Händlern ständig analysiert wird und als Input in den Planungsprozess benutzt wird.

Die folgenden Betrachtungen unterstellen folgendes Zeitschema: M1 ist der aktuelle Monat, M2, M3, ... die folgenden Monate. Wenn die Periodizität wöchentlich ist, würde analog das Schema gelten. W1 ist die aktuelle Woche, W2, W3, ... die folgenden Wochen.

Aus den geplanten und mit den Händlern vereinbarten Jahresverkaufszielen werden monatlich saisonalisierte Verkaufsziele je Produktmodell abgeleitet. Gleichzeitig wird mit dem Händler eine Mindestlagerhaltung je Produktmodell vereinbart, die eingefordert werden kann.

Basierend auf den mit den Importeuren festgelegten Verkaufsvolumina legt der Hersteller die Produktionsvolumina ebenfalls saisonalisiert fest. Von diesen Volumina erhalten die Importeure ihre entsprechenden Anteile, die sich in einem Auftragsverwaltungssystem als zu füllende Kapazitäten (teilweise heruntergebrochen auf bestimmte Produkteigenschaften, wenn diese in der Produktion restriktiv sein sollten) abbilden.

Basierend auf den Verkaufszielen und dadurch auch orientiert an diesen Kapazitäten errechnet das Belieferungssteuerungssystem beim Importeur für jeden Händler seinen Anteil an dieser Produktionskapazität (wenn notwendig, auch für knapp verfügbare, wichtige Produkteigenschaften, um die faire Verteilung zusätzlich zu sichern). Aus dem Durchschnitt dieser Anteile für die Monate M2, M3 und M4 errechnet das System die Vor-Produktfertigstellungs-Quote für den einzelnen Händler (mit Minimum und Maximum). Orientiert an der vereinbarten Mindestlagerhaltung und unter Berücksichtigung des aktuellen Lagerbestandes je Produktmodell wird ebenfalls die Nach-Produktfertigstellungs-Quote mit einem Minimum und einem Maximum berechnet. Bei dieser Berechnung werden die Verkaufsziele der Monate M1, M2 und M3 zugrundegelegt.

Die unterschiedlichen Zeitfenster (M1, M2, M3 bzw. M2, M3, M4) ergeben sich dadurch, dass bei der Vor-Produktfertigstellungs-Quote der Produktionsdurchlauf einer Bestellung (ca. 1 Monat) zu berücksichtigen ist. Dagegen werden in der Nach-Produktfertigstellungs-Quote nur bereits existierende Produkte gesteuert. Die Berücksichtigung eines rollierenden Zeitfensters von 3 Monaten sichert ab, dass starke Saisonalitäten frühzeitig in die Quotenberechnung einfließen.

Somit existieren für jeden Händler Quoten, zwischen denen er sich jeweils frei bewegen kann, nämlich

- die minimale Vor-Produktfertigstellungs-Quote
- die maximale Vor-Produktfertigstellungs-Quote
- die minimale Nach-Produktfertigstellungs-Quote
- die maximale Nach-Produktfertigstellungs-Quote.

Im folgenden werden mögliche Berechnungsbeispiele für die einzelnen Quoten angegeben.

Die minimale Vor-Produktfertigstellungs-Quote berechnet sich beispielsweise zu

$$24\ \%\ (M2 + M3 + M4),$$

was 72 % des errechneten mittleren Monatsquotenwertes entspricht. Die minimale Vor-Produktfertigstellungs-Quote sollte dabei vorzugsweise zwischen 70-80 % der errechneten Monatsquotenwerte liegen.

Die maximale Vor-Produktfertigstellungs-Quote berechnet sich beispielsweise als

$$(\text{Produktionsquote des Monats} + \text{Vor-Produktfertigstellungs-Quote des Importeurs}) * (\text{Summe des Verkaufsziels eines Händlers } M2 + M3 + M4) / (\text{Summe der Verkaufsziele aller Händler } M2 + M3 + M4).$$

Die minimale Nach-Produktfertigstellungs-Quote berechnet sich beispielsweise als

$$20\ \%\ (M1 + M2 + M3),$$

was 5 % des Jahresverkaufszieles entspricht. Die minimale Nach-Produktfertigstellungs-Quote sollte dabei zwischen 5-8 % des Jahresverkaufszieles liegen.

Die maximale Nach-Produktfertigstellungs-Quote berechnet sich beispielsweise als

$$\text{(gesamter Nach-Produktionsfertigstellungs-Bestand des Importeurs + gesamter Nach-Produktionsfertigstellungs-Bestand aller Händler)} * \text{(Summe der Verkaufsziele eines Händlers M1 + M2 + M3)} / \text{(Summe der Verkaufsziele aller Händler M1 + M2 + M3)} - \text{(Nach-Produktionsfertigstellungs-Bestand eines Händlers).}$$

Die Wirkungsweise der minimalen und maximalen Quoten soll hier kurz erläutert werden.

Die Minimumquoten sind für den Händler im Rahmen einer Prozessvereinbarung verpflichtend, sie sind innerhalb der Quotenperiode (in der Regel 1 Monat) zu füllen. Füllt ein Händler die Minimalquote nicht bis zum Ende Quotenperiode, wird die Füllung automatisch durch das System vorgenommen (mit marktgerechten Fahrzeugen aus Importeursbeständen entsprechend der Quote, die betroffen ist).

Das Maximum ist eine Chance, es kann, muss aber nicht erfüllt werden. Es gibt aber gut arbeitenden Händlern die Gelegenheit, mehr als die vereinbarten Ziele zu verkaufen.

Neubestellte Produkte eines Händlers sind im Rahmen einer Schutzperiode bis zu einem bestimmten Zeitpunkt nach Bestellung (z. B. bis 10 oder 30 Tage nach Ankunft des Produktes im Importeurslager) nicht freier Bestand. Das heisst, auf diese Produkte können andere Händler nur nach Verhandlung mit diesem Händler zugreifen. Diese Periode soll dem bestellenden Händler die Sicherheit geben, dass dieser die ausschließliche Chance hat, das "frische" Produkt zu verkaufen. Ist das Produkt nach dieser Schutzfrist noch nicht verkauft, wird es automatisch in den freien Bestand umgebucht, ohne dass allerdings die Besitzverhältnisse geändert werden. Die Länge der Schutzdauer kann dabei nach nationalen Gegebenheiten festgelegt werden.

Jede Produktakquisition (Händler von Importeur, Händler von Händler) und Neubestellung durch Händler wird in der Quotenerfüllung berücksichtigt, negativ wie positiv. Eine Akquisition aus freien Händlerbeständen ist nur möglich, wenn gleichzeitig eine Kundenzuordnung stattfindet. Eine Akquisition aus (immer) freiem Importeursbestand ist möglich auch ohne Kundenzuordnung. Das Produkt wird dann dem Händler finanziell zugeordnet. Eine Akquisition von nicht freiem Händlerbestand (innerhalb der Schutzperiode) ist möglich auch ohne Kundenzuordnung. Das Produkt wird dann akquirierenden Händlern finanziell zugeordnet. Eine Neubestellung im Rahmen der Vor-Produktfertigstellungs-Quote ist jederzeit möglich.

Alle Produkte, die zum Zeitpunkt des Eintreffens auf dem Umschlagplatz des Importeurs nicht bereits an Kunden verkauft sind, verbleiben auf dem Umschlagplatz des Importeurs, bis sie durch einen Händler an einen Kunden verkauft wurden. Der Händler lagert keine unverkauften Produkte auf seinem Gelände, außer Produkte zur Auffüllung seiner Show-Room-Fahrzeuge.

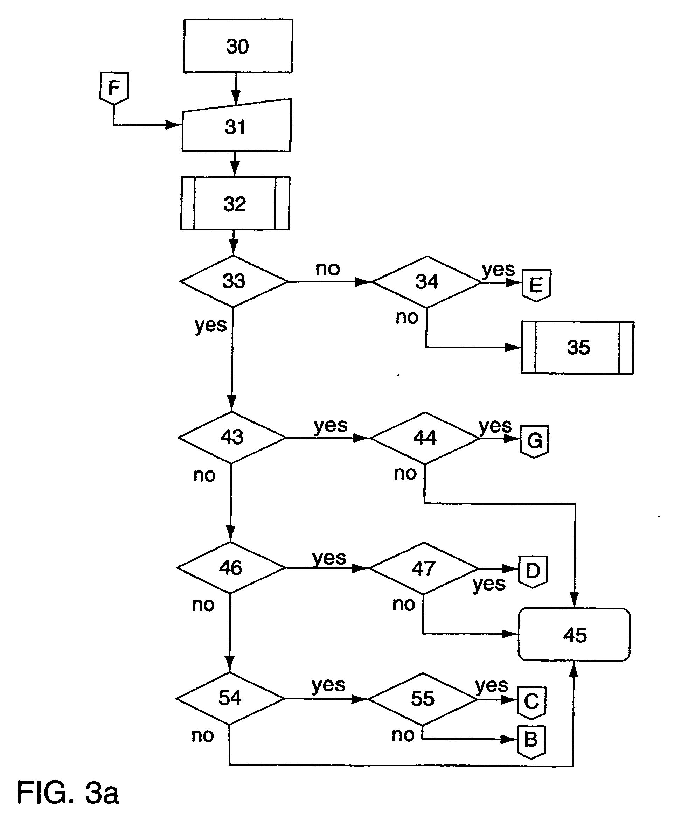

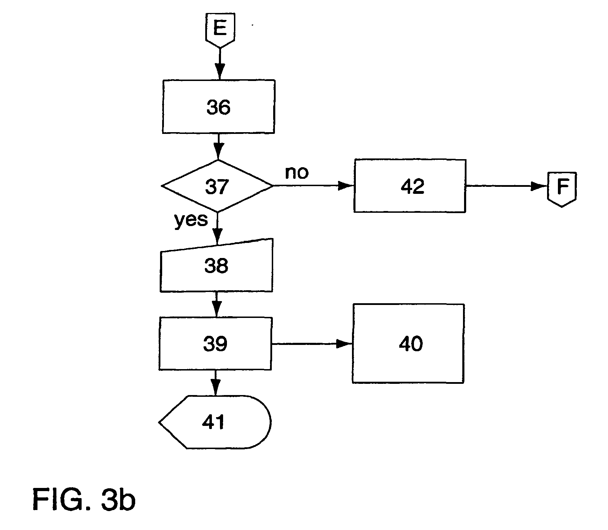

Da aus Händlersicht jede Produktbewegung, ob Akquisition oder Abgabe eines Produktes in der entsprechenden Quote berücksichtigt wird, kann ein Händler das bereits erreichte Minimum in der Quotenperiode auch wieder unterschreiten. Tritt das ein, erhält er neue Quote(n), um zumindest das verpflichtete Minimum auffüllen zu können. Das gilt nur, wenn das Quotenminimum > 0 ist. Durch dieses Verfahren ist sichergestellt, dass der Produktaustausch keinen Händler benachteiligt, und dass Produktaustausch ein gleichwertiges Mittel ist, um einen Kundenwunsch zu befriedigen, respektive eine Quote zu füllen bzw. die Performance zu bringen. Das Verfahren fördert also die Nutzung des gesamten Produktangebotes in der "Pipeline" durch die Händler und erhöht so deutlich den Umschlagsfaktor. Der genaue Ablauf wird später anhand der Fig. 3a-c noch genauer erläutert.

Nun soll zunächst weiter das Blockdiagramm in Fig. 2 weiter erläutert werden.

Die Vorrichtung teilt zur Verwaltung der Gesamtbestände alle Bestände inklusive der Bestände, die sich in Produktion befinden, der Bestände auf dem Transport (Schiff, Bahn etc.) der nationalen Bestände sowie der Bestände der Händler, in die Kategorie "reservierte Bestände" 23, "Bestände eines Händlers" 22, freie Bestände (keine Verhandlung notwendig)" 21, "nicht freie Bestände (eine Verhandlung wird benötigt)" 19, "Bestände des Importeurs" 20 und "bestellbare Bestände" 18 ein. Auch noch nicht produzierte Bestände werden als Bestände behandelt.

Die "reservierten Bestände" 23 sind die Bestände, die ein Händler für einen bestimmten Käufer an den Hersteller online bestellt hat. Um eine Dummybestellung zu vermeiden, kann der Händler nach erfolgter Eingabe den Namen des Käufers nicht mehr ändern. Die reservierten Bestände sind für die anderen Händler nicht mehr im System sichtbar und können daher nicht noch einmal reserviert werden. Sie sind sogenannte gesperrte Fahrzeuge.

"Bestände eines Händlers" 22 sind die Bestände, die ein Händler vor Ort hat und für die noch kein Käufer gefunden ist. Auch die präsentierten (Show Room) Fahrzeuge bei einem Händler sind "Bestände eines Händlers" 22.

"Freie Bestände" 21 brauchen keine Verhandlung. Hierzu gehören Fahrzeuge eines Händlers, für die beispielsweise nach über 30 Tagen nach Ankunft auf dem Umschlagplatz des Importeurs noch keine Lieferungsbestellung eingegangen ist, bzw. kein Käufer gefunden ist. Die Verantwortung für die freien Bestände bleibt jedoch bei dem bestellenden Händler.

Mit der Lieferungsbestellung (call off) initialisiert ein Händler den Transport eines Fahrzeuges vom Zentrallager des Importeurs zu seinem Betrieb, wenn er dieses in seinem Bestand befindliche Fahrzeug für die Auslieferung an einen Kunden oder zur Auffüllung seines Show-Room-Bestandes benötigt.

Zu den "nicht freien Beständen" 19 gehören folgende Fahrzeuge.

(1) Fahrzeuge, deren Produktion festgelegt wurde, bis zu beispielsweise 30 Tagen nach Ankunft auf dem Umschlagplatz des Importeurs

(2) Händlerbestände (Show-Room Fahrzeuge beim Händler)

Wenn für die Fahrzeuge nach Ablauf einer bestimmten Zeitfolge (hier 30 Tage nach Ankunft auf dem Umschlagplatz des Importeurs) keine Lieferungsbestellung eingeht bzw. kein Käufer gefunden wird, werden die Fahrzeuge von den nicht freien Beständen den freien Beständen zugeteilt.

Importeurbestände 20 sind Fahrzeuge, die vom Importeur bestellt wurden. Die Importeurbestände 20 sind auch immer freie Bestände.

Bestellbare Fahrzeugtypen 18 sind die Fahrzeugtypen, die bei nicht erfolgreicher Suche in den Beständen bei der Produktionsstätte bestellt werden können.

Die Daten der bestellbaren Fahrzeugtypen 18, der nicht freien Bestände 19 und der Importeurbestände 20 sind die Komponenten der Vor-Produktionsfertigstellungs-Bestände 16. Dieser Bestand 16 stellt den Suchbereich, den ein Händler innerhalb seiner Vor-Produktionsfertigstellungs-Quote 11 bei einem ersten Suchschritt 13 abfragen darf, dar. Die Benutzer dieses Systems können durch Anwendung des ersten Suchschrittes 13 ein Fahrzeug innerhalb dieser Vor-Produktionsfertigstellungs-Bestände 16 abfragen und akquirieren bzw. neubestellen.

Nicht freie Bestände 19, Importeurbestände 20, freie Bestände 21 und Händlerbestände 22 sind die Komponenten der Nach-Produktionsfertigstellungs-Bestände 17. Dieser Bestand 17 stellt einen Suchbereich, den ein Händler innerhalb seiner Nach-Produktfertigstellungs-Quote 12 bei einem zweiten Suchschritt 14 abfragen darf, dar. Die Benutzer dieses Systems können durch Anwendung des zweiten Suchschrittes 14 ein Fahrzeug innerhalb dieser Nach-Produktionsfertigstellungsbestände 17 abfragen.

Reservierte Fahrzeuge 23 sind die Fahrzeuge, die jeweils für einen bestimmten Kunden reserviert sind. Die Fahrzeuge werden bis zur Abholung als Bestände registriert, können jedoch nicht von anderen Händlern akquiriert werden und werden bei Suchabfragen anderer Händler nicht gezeigt.

Die bestellbaren Fahrzeugtypen 18 bis zu den reservierten Fahrzeugen 23 sind die Komponenten der Gesamtbestände 15.

Bei der "Veränderung der Beständetypen" 25 wird gecheckt, ob bereits 30 Tage nach Ankunft auf dem Umschlagsplatz des Importeurs abgelaufen sind. Ist diese Frist abgelaufen, werden die Beständetypen der Fahrzeuge von den nicht freien Beständen zu den freien Beständen geändert. Während der "nicht freien Zeitspanne", währenddessen eine Verhandlung für die Akquirierung eines Fahrzeuges notwendig ist, dürfen nur die Händler, die das Fahrzeug bestellt haben, ohne Verhandlung das Fahrzeug verkaufen. Während der "freien Zeitspanne" dürfen auch andere Händler das Fahrzeug, wenn sie einen Käufer für das Fahrzeug finden, das Fahrzeug verkaufen. Dadurch können die Mobilität und die Flexibilität der Bestände erhöht werden.

Bei der "Limitierung der Händlerbestände" 24 werden die Händlerbestände für die einzelnen Fahrzeugtypen limitiert. Das Ziel dieser Limitierung liegt darin, dass die Bestände nicht von den einzelnen Händlern sondern physisch vom Importeur gehalten werden. Dadurch kann die Mobilität der Bestände erhöht werden. Sind Bestände der einzelnen Händler zu hoch, können folgende Nachteile entstehen.

(1) Da die Bestände, nicht wie die Importeurbestände "freie Bestände" sind, sondern in "freie Bestände" und "nicht freie Bestände" unterteilt sind, muss der Verkauf der Fahrzeuge verhandelt werden, was eine schlechte Mobilität der Bestände zur Folge hat.

(2) Die Qualität der Bestände kann sich durch lange und unsachgemäße Lagerung verschlechtern und die Kundenzufriedenheit sinken.

(3) Die Kosten der Händler können enorm steigen.

Es ist deshalb vorteilhaft, durch Limitierung der Händlerbestände diese so gering wie möglich zu halten, wobei vorzugsweise die Händler nur Show-Room-Fahrzeuge pysisch vor Ort halten.

Bei der "Bearbeitung der Bestellung" 28 werden die Bestellungen regelmäßig bearbeitet.

Die Händler können durch die Verwendung dieses Systems nicht nur einfach sondern auch effizient (ohne Verschwendung) Fahrzeuge akquirieren, da die Quote festgelegt wird und die Bestände kategorisiert werden. Um ein Fahrzeug aus den "nicht freien Beständen" zu akquirieren, muss ein Händler mit anderen Händlern erfolgreich verhandeln. Ein Fahrzeug aus den "freien Beständen" kann ein Händler ohne Verhandlung akquirieren, wobei es einen Käufer dafür geben muss. Ein Fahrzeug aus den Importeurbeständen kann ein Händler ohne Verhandlung unabhängig davon, ob es ein Käufer dafür gibt oder nicht, akquirieren.

In den Fig. 3a-c ist der Verfahrensablauf dargestellt.

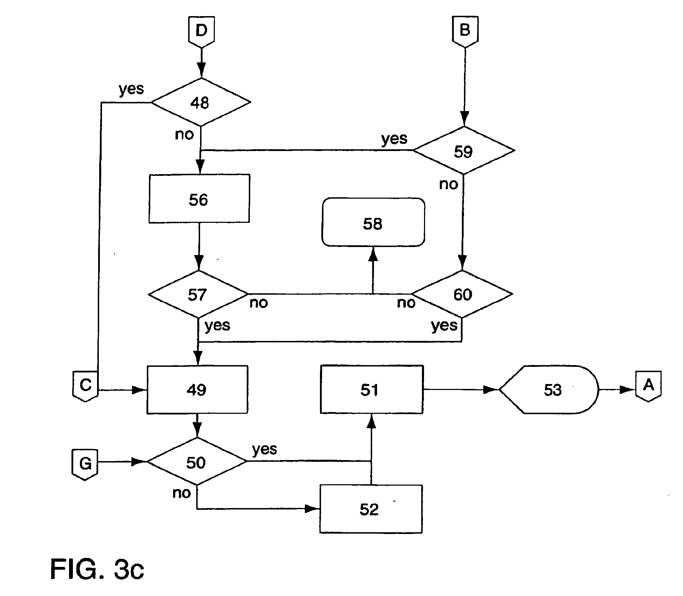

In einem ersten Schritt 30 wird das Verfahren gestartet, wobei der Auslöser eine Kundenanfrage oder ein Händlerwunsch zur Auffüllung seiner Bestände sein kann. In einem nachfolgenden Schritt 31 wird der Händler zunächst aufgefordert, das Fahrzeug zu spezifizieren. Die Spezifikationsmerkmale sind dabei insbesondere Fahrzeugtyp, Farbe und Ausstattung. Anschließend erfolgt in Schritt 32 der eigentlich Suchprozess, wobei der genaue Ablauf hier nicht näher betrachtet werden soll. In Schritt 33 erfolgt die Verzweigung, ob ein gesuchtes Fahrzeug gefunden wurde oder nicht. Wurde kein Fahrzeug gefunden, so wird in Schritt 34 der Händler gefragt, ob dieser eine Produktbestellung vornehmen möchte. Falls dies verneint wird, wird das Verfahren in Schritt 35 beendet. Alternativ kann vorgesehen sein, dass dann die Möglichkeit besteht, in den Importeurbeständen benachbarter Länder nach dem gewünschten Produkt zu suchen. Wird hingegen eine Produktbestellung gewünscht, so wird der Händler in Schritt 36 (Fig. 3c) aufgefordert, entsprechend seiner verbliebenen oder zukünftigen Vor-Produktfertigstellungs-Quote die Produktbestellung zu spezifizieren, so dass die voraussichtliche Lieferzeit bestimmbar ist. In Schritt 37 wird der Kunde gefragt, ob dieser mit diesem Liefertermin einverstanden ist. Ist der Kunde einverstanden, so wird in Schritt 38 die Bestellung spezifiziert (mit zusätzlichen Kundendaten) und in Schritt 39 an den Importeur übertragen. Der Importeur überträgt dann in einem Schritt 40 die Bestellung an den Hersteller. Des weiteren wird in einem Schritt 41 das neubestellte Fahrzeug dem Händler bei seiner Vor-Produktfertigstellungs-Quote angerechnet. Ist der Kunde mit dem in Aussicht gestellten Liefertermin hingegen nicht einverstanden, so erfolgt in Schritt 42 eine Verhandlung mit dem Kunden über eine alternative Spezifikation (beispielsweise andere Farbe). Ist das Nachverhandeln nicht erfolgreich, so ist das Verfahren beendet.

Ansonsten beginnt das Verfahren bei Schritt 31 erneut.

Wurde hingegen bei Schritt 33 ein Fahrzeug gefunden, so wird in Schritt 43 abgefragt, ob es sich um ein Fahrzeug aus den Beständen des Händlers handelt. Ist dies der Fall, so wird in Schritt 44 die Lieferzeit abgefragt. Ist diese für den Kunden akzeptabel, so geht es mit Schritt 38 weiter. Ist die Lieferzeit hingegen für den Kunden nicht akzeptabel, so muss in Schritt 45 abgefragt werden, ob der Kunde eine andere Spezifikation akzeptiert (dann weiter mit Schritt 31) oder ob das Verfahren beendet werden soll. Handelt es sich hingegen bei der Abfrage nach Schritt 43 nicht um ein eigenes Fahrzeug, so wird in Schritt 46 geprüft, ob das Fahrzeug aus den Vor-Produktfertigstellungs-Beständen stammt. Ist dies der Fall, so wird in Schritt 47 abgefragt, ob der Händler noch eine verbleibende Vor-Produktfertigstellungs-Quote hat. Ist dies nicht der Fall, so wird in Schritt 45 wieder abgefragt, ob eine neue Suche (Schnitt 31) durchgeführt werden soll oder ob das Verfahren beendet werden soll. Des weiteren wird der Händler angefragt, ob er eine zukünftige Quote nutzen will, so dass mit Schritt 36 fortgefahren wird. Hat der Händler hingegen noch eine Vor-Produktfertigstellungs-Quote, so wird in Schritt 48 (Fig. 3c) abgefragt, ob das Fahrzeug aus dem Vor-Produktfertigstellungs-Bestand des Importeurs stammt. Ist dies der Fall. so wird in Schritt 49 das Fahrzeug dem Händler zugebucht. In Schritt 50 wird dann der Händler gefragt, ob dieser das Fahrzeug sofort abrufen möchte, sobald das Fahrzeug pysikalisch beim Importeur angekommen ist, so dass dieses auch physikalisch vom Importeur an den Händler ausgeliefert wird. Wünscht der Händler bzw. Kunde die sofortige Auslieferung, so wird dies an den Rechner des Importeurs übertragen und dort in Schritt 51 abgespeichert. Wünscht der Händler bzw. Kunde eine verzögerte Auslieferung, so kann dieser in Schritt 52 innerhalb eines Zeitfensters von beispielsweise 4-8 Wochen die Auslieferung verzögern und in den Rechner des Importeurs übertragen, wo dies wieder in Schritt 51 abgespeichert wird. Anschließend wird in Schritt 53 das umgebuchte Fahrzeug der Vor-Produktfertigstellungs-Quote des Händlers zugerechnet.

Ergibt hingegen die Abfrage in Schritt 48, dass das Fahrzeug nicht zu den Beständen des Importeurs gehört, muss es sich um ein Fahrzeug aus den nicht freien Beständen eines anderen Händlers handeln. In Schritt 56 erfolgt dann die Verhandlung mit dem anderen Händler. In Schritt 57 wird abgefragt, ob die Verhandlung erfolgreich war. Ist dies der Fall, wird mit Schritt 49 fortgeführt, ansonsten wird in Schritt 58 angefragt, ob eine neue Suche gestartet werden soll oder das Verfahren beendet werden soll.

Handelt es sich hingegen bei dem gefundenen Fahrzeug um ein Fahrzeug aus dem Nach-Produktfertigstellungs-Beständen, so wird in Schritt 54 abgefragt, ob der Händler noch eine Nach-Produktfertigstellungs-Quote hat. Ist dies nicht der Fall, so wird wieder in Schritt 45 abgefragt, ob die nächste Quote (für den nächsten Monat) verwendet werden soll, eine neue Suche gestartet werden soll oder das Verfahren beendet werden soll. Besteht hingegen noch eine Nach-Produktfertigstellungs-Quote, so wird in Schritt 55 abgefragt, ob das gefundene Fahrzeug aus den Nach-Produktfertigstellungs-Beständen stammt. Ist dies der Fall, so wird mit Schritt 49 fortgesetzt. Ergibt hingegen die Abfrage in Schritt 55, dass das Fahrzeug nicht aus den Beständen des Importeurs stammt, so muss es sich um ein Fahrzeug eines anderen Händlers handeln.

In Schritt 59 wird daher zunächst überprüft, ob das Fahrzeug zu den nicht freien Beständen gehört. Ist dies der Fall, muss in Schritt 56 wieder mit dem anderen Händler verhandelt werden. Stammt das Fahrzeug hingegen aus freien Beständen, so wird in Schritt 60 abgefragt, ob ein Kunde existiert. Ist dies der Fall, so wird mit Schritt 49 fortgesetzt. Ansonsten geht es mit Schritt 58 weiter.

Hinsichtlich der Suchstrategie in Schritt 32 ist folgendes anzumerken. Die Reihenfolge der Suche in den jeweiligen Beständen ist davon abhängig, welcher Parameter optimiert werden soll, wobei sich die Strategien teilweise überlappen. Mögliche Suchkriterien sind beispielsweise das Alter des Produktes, der Status in der Lieferpipeline oder die Einfachheit der Reservierung. Bei der Einfachheit der Reservierung werden zunächst die freien Bestände durchsucht, wohingegen bei Alter des Produktes und Status in der Lieferpipeline zunächst die Nach-Produktfertigstellungs-Bestände durchsucht werden. Dabei werden aber vorzugsweise zunächst immer die eigenen Nach-Produktfertigstellungs-Bestände durchsucht. Welches Kriterium das Hauptkriterium ist, hängt unter anderem von der Entfernung des Landes zur Produktionsstätte oder von dem durchschnittlichen Lieferzeitbedürfnis der Kunden ab.

Das Verfahren bewirkt eine Erhöhung des Lagerumschlages durch die Motivation und Absicherung von Produkttauschen, eine hohe Handlungsflexibilität durch die flexiblen Quoten. Aufgrund des transparenten Steuerungssystems kann sich jeder Händler jederzeit über die Erfüllung seiner Quoten bzw. der anderer Händler informieren. Durch die Transparenz und die klaren Verteilungsregeln schafft das Verfahren Vertrauen, da alle Händler auch bei temporären Über- oder Unterlieferungen durch den Hersteller gleichbehandelt werden. Des weiteren werden durch die zentrale Lagerung der Fahrzeuge beim Importeur erhebliche Kosten für die Lagerung beim einzelnen Händler und für Quertransporte von den einzelnen Händler zueinander eingespart.

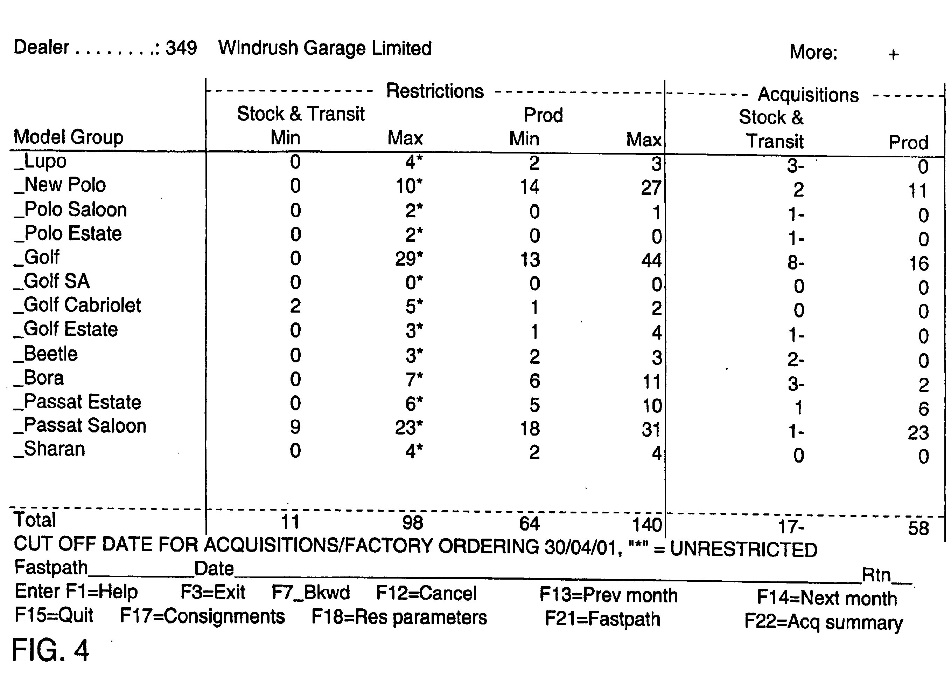

Der einzelne Händler aber auch der Importeur müssen jederzeit die Möglichkeit haben, sich einen Überblick über die verteilten bzw. erfüllten Quoten zu informieren, was jeweils über die zugeordneten Rechner erfolgt. In der Fig. 4 ist beispielhaft eine derartige Darstellung für einen bestimmten Händler (Dealer) dargestellt. In der linken Spalte sind die einzelnen Fahrzeugtypen dargestellt. In der nächsten Spalte ist die jeweilige minimale Nach-Produktfertigstellungs-Quote für den einzelnen Fahrzeugtyp dargestellt (Stock & Transit Min). Daneben ist die jeweilige maximale Nach-Produktfertigstellungs-Quote dargestellt, wobei das Symbol * bedeutet, daß die maximalen Quoten aufgelöst wurden. In den beiden Spalten daneben sind jeweils die minimale und maximale Vor-Produktfertigstellungs-Quote dargestellt. In den beiden letzten Spalten sind die Erfüllungen der Nach- und Vor-Produktfertigstellungs-Quoten dargestellt, wobei diese auch negativ sein können. Dies soll beispielhaft am Fahrzeugtyp "Lupo" erläutert werden. Dabei bedeutet "3-", daß 3 Fahrzeuge des Typs Lupo aus seinem Bestand heraus von anderen Händlern akquiriert wurden. Ein Minus bei der Quotenerfüllung muß jedoch nur ausgeglichen werden, wenn die Minimum-Quote > 0 ist. Ist diese hingegen wie im vorliegenden Beispiel gleich Null, so besteht keine Akquisitionsverpflichtung. Allerdings wird dann die Bestandssenkung (hier -3) bei der nächsten Quotenberechnung berücksichtigt.

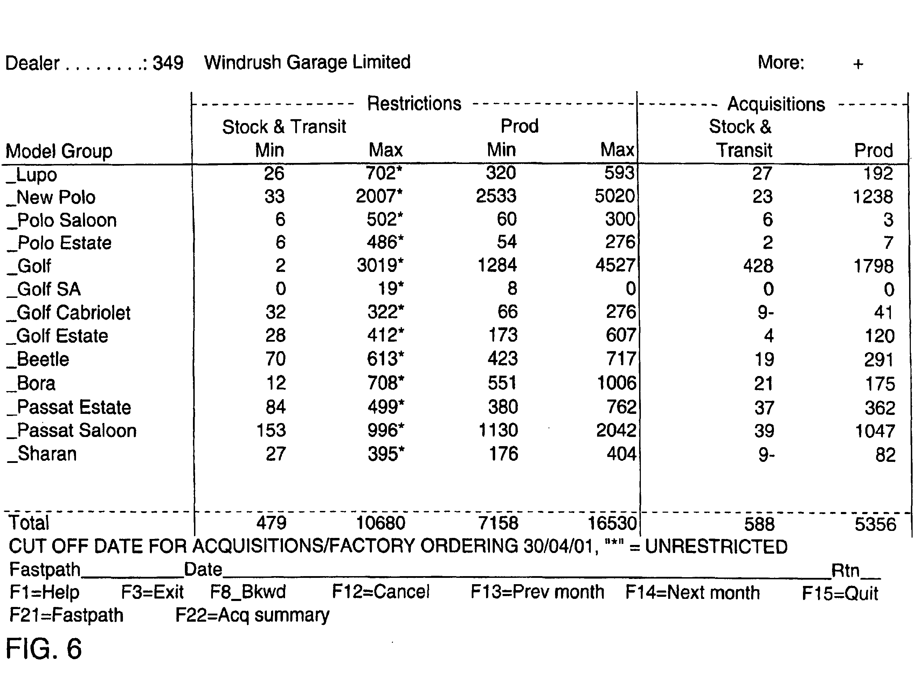

Die "0" bei der Vor-Produktfertigstellungs-Quote (Prod) bedeutet, daß der Händler noch kein Fahrzeug des Typ Lupo beim Hersteller bestellt hat, so daß dieser noch 2 bestellen muß, um seine minimale Vor-Produktfertigstellungs-Quote zu erfüllen. Entsprechend ist in Fig.6 die Darstellung für die Summe aller Händler dargestellt.

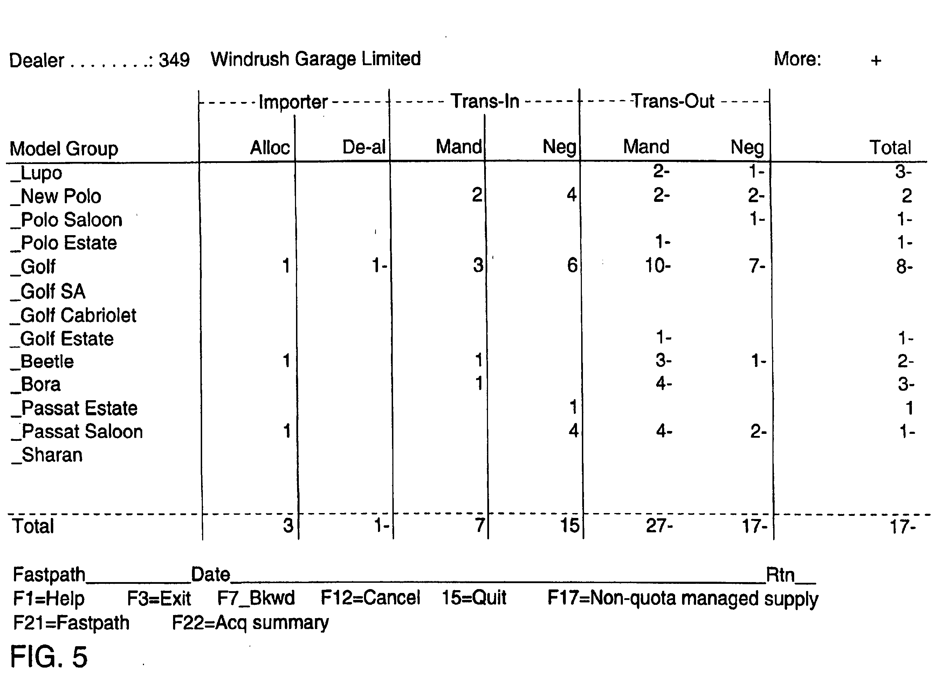

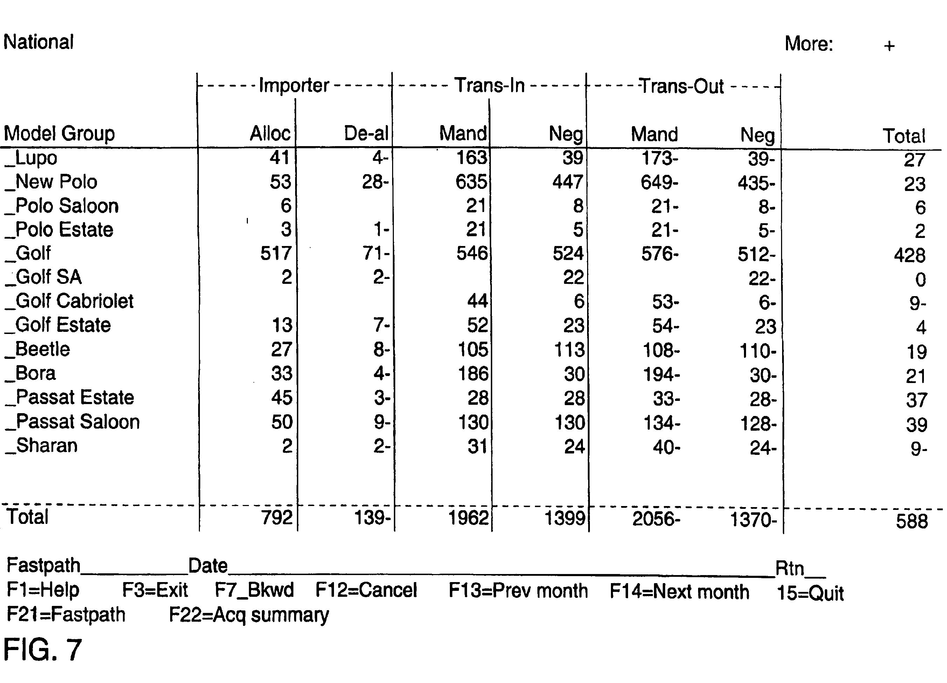

In der Fig.5 sind beispielhaft die Fahrzeugbewegungen eines Händlers dargestellt, wobei in der linken Spalte wieder die unterschiedlichen Fahrzeugtypen dargestellt sind. In der nächsten Spalte sind Akquisitionen vom Händler aus den Importeursbeständen und in der nächsten Spalte entsprechende Rückabwicklungen. In den beiden nächsten Spalten sind die Fahrzeugzugänge dargestellt, wobei die erste Spalte (Mand) Akquisitionen aus freien Beständen anderer Händler und die zweite Spalte (Neg) Akquisitionen nach Verhandlung mit anderen Händlern aus deren nicht freien Beständen darstellt. In den beiden nächsten Spalten sind die Fahrzeugabgänge des Händlers dargestellt und schließlich in der letzten Spalte die Bilanz von Zu- und Abgängen. Anhand des Fahrzeugtyps Lupo soll dies wieder kurz näher erläutert werden. Wie aus den ersten vier Spalten hervorgeht, hat der Händler weder vom Importeur noch von anderen Händlern einen Lupo akquiriert. Andererseits haben andere Händler zwei Lupos aus seinen freien Beständen und einen Lupo nach Verhandlung aus seinen nicht freien Beständen akquiriert, so daß sich insgesamt ein Minus von drei Fahrzeugen ergibt (siehe auch Fig.4). In der Fig. 7 sind wiederum die Fahrzeugbewegungen aller Händler dargestellt.

## Patentansprüche

1. Verfahren zur zentralen Belieferungssteuerung von technischen Produkten mit langen Lieferzeiten von ihrer Herstellungsstätte zu den abnehmenden Händlern, mittels eines Datennetzwerkes mit mindestens einer zentralen Datenbank, wobei jedem Händler mindestens ein Rechner (1-1) zur Datenabfrage zentralverwalteter Daten der Datenbank eines ihm zugeordneten Importeurs und/oder Herstellers zugeordnet ist, umfassend folgende Verfahrensschritte:

a) einen Sortierschritt, bei dem der Gesamtbestand an den technischen Produkten In Bestände unterteilt wird, welche nach ihrer Zugehörigkeit zu jeweils einem von mindestens zwei fertigungsspezfischen Prozessabschnitten kategorislert sind,

b) einen Zuteitungsschritt, bei dem den einzelnen Händlern und/oder Importeuren die nach fertlgungsspezifischen Prozessabschnitten kategorisierten Bestände zugeteilt werden, wobei die zugeteilten Bestände in freie Bestände, für deren Akquirieren keine Verhandlung notwendig ist, nicht freie Bestände, für deren Akquirieren eine Verhandlung benötigt wird, und bereits Endkunden zugeordnete Bestände untertelIt sind.

c) Suchabfrage nach einem gewünschten technischen Produkt durch einen Händler über seinen Rechner (1-1), wobei sich die Suche auf die folgenden Bestände erstreckt:

- freie und nicht freie Bestände, die jeweils noch keinem Endkunden zugeordnet sind
- freie Bestände, die noch keinem Händler zugeordnet sind,
- freie Bestände, die noch einem anderen Händler zugeordnet sind, aber ohne Verhandlung akquiriert werden können und
- nicht freie Bestände, die noch einem anderen Händler zugeordnet sind, aber nur nach Verhandlung mit diesem Händler akquiriert werden können;
- wobei die Reihenfolge der Suchabfrage in den einzelnen Beständen von Zusatzbedingungen abhängig gemacht werden kann, die der Händler und/oder das System vorgeben und

d) Akquirleren eines gefundenen technischen Produktes durch den Händler, wobei das akquirierte technische Produkt aus seinem ursprünglich zugeordneten Bestand in den Bestand des Händlers umgruppiert wird und für den Fall der Zuordnung eines Endkunden für die anderen Händler nicht mehr im System sichtbar ist

2. Verfahren nach Anspruch 1, **dadurch gekennzeichnet, dass** nach einer vorgebbaren Zeit nicht freie Bestände eines Händlers in freie Bestände geändert werden.

3. Verfahren nach Anspruch 1, **dadurch gekennzeichnet, dass** das akquirierte Produkt zu den nicht freien Beständen des Händlers zugeordnet wird, falls noch keine Kundenzuordnung erfolgt ist und das Produkt aus den nicht freien Beständen eines anderen Händlers stammt.

4. Verfahren nach Anspruch 1, **dadurch gekennzeichnet, dass** die Unterteilung der Bestände in Bestände vor Produktfertigstellung und Bestände nach Produktfertigstellung erfolgt

5. Verfahren nach Anspruch 1, **dadurch gekennzeichnet, dass** jedem Händler in jedem Prozessabschnitt eine Minimum-Quote und eine Maximum-Quote zugeordnet ist.

6. Verfahren nach Anspruch 1, **dadurch gekennzeichnet, dass** im Suchschritt zunächst das älteste Produkt in den Beständen gesucht wird, wenn keine abweichenden Zusatzbedingungen eingegeben werden, wobei vorzugsweise zunächst die freien Bestände durchsucht werden.

7. Verfahren nach Anspruch 1, **dadurch gekennzeichnet, dass** sich bei erfolgloser Suche in den Beständen ein Produktionsbestellungsschritt anschließt.

8. Verfahren nach Anspruch 4, **dadurch gekennzeichnet, dass** die Unterteilung der Bestände aus Sicht eines Händlers wie folgt ist:

a) Eigene Bestände vor Produktfertigstellung,
b) Freie Bestände, die Bestände des Importeurs vor Produktfertigsteilung umfassen,
c) Nicht freie Bestände, die Bestände anderer Händler vor Produktfertigstellung umfassen,
d) Eigene Bestände nach Produktfertlgstellung,
e) Freie Bestände, die Bestände des Importeurs nach Produktfertigstellung umfassen,
f) Nicht freie Bestände, die Bestände anderer Händler nach Produktfertfgstellung umfassen,
g) Freie Bestände, die Bestände anderer Händler nach Produktfertigstellung umfassen,
h) Gesperrte Bestände, die bereits eine Kundenzuordnung haben.

9. Verfahren nach Anspruch 5, **dadurch gekennzeichnet, dass** die Maximum-Quote der Nach-Produktfertigstellungs-Quote nach einer vorgebbaren Zeit aufgelöst wird.

10. Vorrichtung zur zentralen Belleferungssteuerung von technischen Produkten, mit langen Lieferzeiten von ihrer Herstellungsstätte zu den Händlern, umfassend ein Datennetzwerk mit mindestens einer zentralen Datenbank, wobei jedem Händler ein Rechner (1-1) zur Abfrage der zentralverwalteten Daten der Datenbank zugeordnet ist, wobei in der Datenbank der Gesamtbestand an den technischen Produkten In Bestände unterteilt ist, weiche nach ihrer Zugehörigkeit zu jeweils einem von mindestens zwei fertigungsspezlfischen Prozessschritten kategorisiert sind und den einzelnen Importeuren und /oder Händlern Bestände zugeordnet sind, wobei die einzelnen jeweils zugeordneten Bestände jeweils in freie Bestände, für deren Akquirieren keine Verhandlung notwendig ist, nicht freie Beständen, für deren Akqulrieren eine Verhandlung benötigt wird, und Endkunden zugeordnete Bestände unterteilt sind, wobei mittels der Rechner (1-1) eine Suchabfrage nach einem gewünschtentechnischen Produkt durch einen Händler und/oder Importeur in der zentralen Datenbank veranlassbar ist, wobei sich die Suche auf die folgenden Lagerbestände erstreckt

- freie und nicht freie Bestände, die jeweils noch keinem Endkunden zugeordnet sind,
- freie Bestände, die noch keinem Händler zugeordnet sind,
- freie Bestände, die noch einem anderen Händler zugeordnet sind, aber ohne Verhandlung reserviert werden können und
- nicht freie Bestände, die noch einem anderen Händler zugeordnet sind, aber nur nach Verhandlung mit diesem Händler reserviert werden können,
- wobei die Reihenfolge der Suchabfrage in den einzelnen Beständen von Zusatzbedingungen abhängig gemacht werden kann, die durch den Händler und/oder die Vorrichtung vorgebbar sind und ein gefundenes technisches Produkt für den Händler akqulrierbar, in dessen Zuteilung umbuchbar und für den Fall der Zuordnung eines Endkunden für die anderen Händler nicht mehr im System sichtbar ist.

11. Computerprogramm mit Programmcode-Mitteln, um alle Schritte von jedem beliebigen der Ansprüche 1 bis 9 durchzuführen, wenn das Programm auf einem Computer ausgeführt wird.

12. Computerprogramm mit Programmcode-Mitteln, die auf einem computerlesbaren Datenträger gespeichert sind, um das Verfahren nach jedem beliebigen der Ansprüche 1 bis 9 durchzuführen, wenn das Programmprodukt auf einem Computer ausgeführt wird.

**Claims**

1. Method for centrally controlling the delivery of technical products with long lead times from their production plant to the receiving dealers, by means of a data network with at least one central database, each dealer being assigned at least one computer (1-1) for making an inquiry to retrieve centrally managed data of the database of an importer and/or manufacturer assigned to him, comprising the following method steps:

a) a sorting step, in which the entire stock of technical products is divided into stocks which are categorized according to their respective association with one of at least two production-specific process phases,
b) an allocation step, in which the individual dealers and/or importers are allocated the stocks categorized according to production-specific process phases, the allocated stocks being divided into free stocks, for the acquisition of which no negotiation is necessary, non-free stocks, for the acquisition of which negotiation is required, and stocks already assigned to final customers,
c) a search inquiry for a desired technical product by a dealer using his computer (1-1), the search extending to the following stocks:

- free and non-free stocks that are in each case not yet assigned to a final customer
- free stocks that are not yet assigned to a dealer,
- free stocks that are still assigned to another dealer, but can be acquired without negotiation and
- non-free stocks that are still assigned to another dealer but can only be acquired after negotiation with this dealer;
- it being possible for the sequence of the search inquiry in the individual stocks to be made dependent on additional conditions which the dealer and/or the system prescribe and

d) acquisition by the dealer of a found technical product, the acquired technical product being reclassified from its originally assigned stock into the dealer's stock and, in the event of assignment of a final customer, no longer visible in the system for other dealers.

2. Method according to Claim 1, **characterized in that**, after a predeterminable time, a dealer's non-free stocks are changed into free stocks.

3. Method according to Claim 1, **characterized in that** the acquired product is assigned to the dealer's non-free stocks if there has still not been a customer assignment and the product originates from the non-free stocks of another dealer.

4. Method according to Claim 1, **characterized in that** the stocks are divided into stocks before product completion and stocks after product completion.

5. Method according to Claim 1, **characterized in that** each dealer is assigned in each process phase a minimum quota and a maximum quota.

6. Method according to Claim 1, **characterized in that**, in the search step, the oldest product in the stocks is searched first, unless additional conditions to a different effect are entered, the free stocks preferably being searched through first.

7. Method according to Claim 1, **characterized in that**, if the search in the stocks is unsuccessful, a production ordering step then follows.

8. Method according to Claim 4, **characterized in that**, from the viewpoint of a dealer, the stocks are divided as follows:

   a) own stocks before product completion,
   b) free stocks that include the importer's stocks before product completion,
   c) non-free stocks that include other dealers' stocks before product completion,
   d) own stocks after product completion,
   e) free stocks that include the importer's stocks after product completion,
   f) non-free stocks that include other dealers' stocks after product completion,
   g) free stocks that include other dealers' stocks after product completion,
   h) barred stocks that are already assigned to a customer.

9. Method according to Claim 5, **characterized in that** the maximum quota of the after-production-completion quota is cancelled after a predeterminable time.

10. System for centrally controlling the delivery of technical products with long lead times from their production plant to the dealers, comprising a data network with at least one central data base, each dealer being assigned a computer (1-1) for making an inquiry to retrieve the centrally managed data of the data base, the total stock of technical products being divided in the database into stocks which are categorized according to their respective association with one of at least two production-specific process phases and stocks which are assigned to the individual importers and/or dealers, the individual respectively assigned stocks being divided in each case into free stocks, for the acquisition of which no negotiation is necessary, non-free stocks, for the acquisition of which negotiation is required, and stocks assigned to final customers, it being possible by means of the computers (1-1) for a dealer and/or importer to initiate a search inquiry for a desired technical product in the central database, the search extending to the following stored stocks:

    - free and non-free stocks that are in each case not yet assigned to a final customer,
    - free stocks that are not yet assigned to a dealer,
    - free stocks that are still assigned to another dealer but can be reserved without negotiation and
    - non-free stocks that are still assigned to another dealer but can only be reserved after negotiation with this dealer,
    - it being possible for the sequence of the search inquiry in the individual stocks to be made dependent on additional conditions which can be prescribed by the dealer and/or the system, and it being possible for a found technical product to be acquired for the dealer, reclassified as allotted to him and, in the event of assignment of a final customer, no longer visible in the system for other dealers.

11. Computer program with programming coding means in order to carry out all the steps from any one of Claims 1 to 9 when the program is run on a computer.

12. Computer program with program coding means which are stored on a computer-readable data carrier, in order to carry out the method according to any one of Claims 1 to 9 when the program product is run on a computer.

**Revendications**

1. Procédé de commande centrale d'approvisionnement en produits techniques à longs délais de livraison depuis leur lieu de fabrication aux négociants acquéreurs, au moyen d'un réseau de données comportant au moins une banque centrale de données, au moins un ordinateur (1-1') étant attribué à chaque négociant pour la demande de données gérées de façon centrale de la banque de données d'un importateur et/ou fabricant qui lui est associée, comprenant les étapes suivantes du procédé :

   a) une étape de tri, au cours de laquelle le stock total de produits techniques est subdivisé en stocks, lesquels sont catégorisés suivant leur appartenance à chaque fois une d'au moins deux étapes spécifiques du processus de fabrication,
   b) une étape d'attribution, au cours de laquelle les stocks catégorisés suivant des étapes spécifiques du processus de fabrication sont attribués aux négociants et/ou importateurs individuels, les stocks attribués étant subdivisés en stocks libres dont l'acquisition ne nécessite aucune négociation, en stocks non libres dont l'acquisition nécessite une négociation et en stocks déjà attribués à des clients finaux,
   c) une demande de recherche d'un produit technique souhaité par un négociant par l'intermédiaire de son ordinateur (1-1), la recherche s'étendant aux stocks suivants :

      - stocks libres et stocks non libres, lesquels ne sont pas encore attribués à des clients finaux,
      - stocks libres, lesquels ne sont pas encore attribués à des négociants,
      - stocks libres, lesquels sont encore attribués à un autre négociant, mais peuvent être acquis sans négociation, et
      - stocks non libres, lesquels sont encore attribués à un autre négociant, mais peuvent être acquis uniquement après négociation avec ce négociant,
      - la succession de la demande de recherche dans les stocks individuels pouvant être subordonnée à des conditions complémentaires que le négociant et/ou le système prédéfinit et

   d) acquisition d'un produit technique trouvé par le négociant, le produit technique acquis étant transféré de son stock initialement attribué dans le stock du négociant et n'étant plus visible dans le système pour les autres négociants dans le cas de l'attribution à un client final.

2. Procédé selon la revendication 1, **caractérisé en ce que** des stocks non libres d'un négociant sont changés en stocks libres après un temps pouvant être prédéfini.

3. Procédé selon la revendication 1, **caractérisé en ce que** le produit acquis est attribué aux stocks non libres du négociant dans le cas où aucune attribution à un client n'a encore eu lieu et le produit provient des stocks non libres d'un autre négociant.

4. Procédé selon la revendication 1, **caractérisé en ce que** la subdivision des stocks a lieu en stocks avant achèvement du produit et en stocks après achèvement du produit.

5. Procédé selon la revendication 1, **caractérisé en ce que** un quota minimum et un quota maximum est attribué à chaque négociant à chaque étape du processus.

6. Procédé selon la revendication 1, **caractérisé en ce qu'**à l'étape de recherche, le produit le plus ancien est d'abord recherché dans les stocks lorsque aucune condition complémentaire dérogatoire n'est définie, les stocks libres étant de préférence d'abord explorés.

7. Procédé selon la revendication 1, **caractérisé en ce qu'**en cas de recherche infructueuse dans les stocks, une étape de commande de production s'ensuit.

8. Procédé selon la revendication 4, **caractérisé en ce que** la subdivision des stocks vus par un négociant est la suivante :

   a) Stocks propres avant achèvement du produit,
   b) Stocks libres, lesquels comprennent des stocks de l'importateur avant achèvement du produit,
   c) Stocks non libres, lesquels comprennent des stocks d'autres négociants avant achèvement du produit,
   d) Stocks propres après achèvement du produit,

e) Stocks libres, lesquels comprennent des stocks de l'importateur après achèvement du produit,

f) Stocks non libres, lesquels comprennent des stocks d'autres négociants après achèvement du produit,

g) Stocks libres, lesquels comprennent des stocks d'autres négociants après achèvement du produit,

h) Stocks bloqués, lesquels sont déjà attribués à des clients.

9. Procédé selon la revendication 5, **caractérisé en ce que** le quota maximum du quota après achèvement du produit est libéré après un temps pouvant être prédéfini.

10. Dispositif de commande centrale d'approvisionnement en produits techniques à longs délais de livraison depuis leur lieu de fabrication aux négociants, comportant un réseau de données avec au moins une banque centrale de données, un ordinateur (1-1) étant attribué chaque négociant pour la demande de données gérées de façon centrale de la banque de données, le stock total de produits techniques étant subdivisé en stocks dans la banque de données, lesquels sont catégorisés suivant leur appartenance à chaque fois une d'au moins deux étapes spécifiques du processus de fabrication, et des stocks étant attribués aux importateurs et/ou négociants individuels, les stocks attribués chaque fois de façon individuelle étant subdivisés chaque fois en stocks libres dont l'acquisition ne nécessite aucune négociation, en stocks non libres dont l'acquisition nécessite une négociation et en stocks attribués à des clients finaux, une demande de recherche dans la banque centrale de données d'un produit technique souhaité pouvant être ordonnée par un négociant et/ou importateur au moyen de l'ordinateur (1-1), la recherche s'étendant aux stocks suivants :

- stocks libres et stocks non libres, lesquels ne sont pas encore attribués à des clients finaux,

- stocks libres, lesquels ne sont pas encore attribués à des négociants,

- stocks libres, lesquels sont encore attribués à un autre négociant, mais peuvent être réservés sans négociation, et

- stocks non libres, lesquels sont encore attribués à un autre négociant, mais peuvent être réservés uniquement après négociation avec ce négociant,

- la succession de la demande de recherche dans les stocks individuels pouvant être subordonnée à des conditions complémentaires, lesquelles peuvent être prédéfinies par le négociant et/ou le dispositif, et un produit technique trouvé pouvant être acquis par le négociant, transféré dans son stock et rendu dorénavant invisible dans le système pour les autres négociants dans le cas de l'attribution à un client final.

11. Programme d'ordinateur comportant des moyens de codes de programme pour effectuer toutes les étapes de l'une quelconque des revendications 1 à 9, lorsque le programme est exécuté sur un ordinateur.

12. Programme d'ordinateur comportant des moyens de codes de programme, lesquels sont mémorisés sur un support de données pouvant être lues par un ordinateur, pour mettre en oeuvre le procédé selon l'une quelconque des revendications 1 à 9, lorsque le programme est exécuté sur un ordinateur.

FIG. 1

FIG. 2

FIG. 3a

FIG. 3b

FIG. 3c

Dealer . . . . . . . . .: 349    Windrush Garage Limited                                              More:        +

| Model Group | Restrictions | | | | Acquisitions | |
| | Stock & Transit | | Prod | | Stock & | |
| | Min | Max | Min | Max | Transit | Prod |
|---|---|---|---|---|---|---|
| _Lupo | 0 | 4* | 2 | 3 | 3- | 0 |
| _New Polo | 0 | 10* | 14 | 27 | 2 | 11 |
| _Polo Saloon | 0 | 2* | 0 | 1 | 1- | 0 |
| _Polo Estate | 0 | 2* | 0 | 0 | 1- | 0 |
| _Golf | 0 | 29* | 13 | 44 | 8- | 16 |
| _Golf SA | 0 | 0* | 0 | 0 | 0 | 0 |
| _Golf Cabriolet | 2 | 5* | 1 | 2 | 0 | 0 |
| _Golf Estate | 0 | 3* | 1 | 4 | 1- | 0 |
| _Beetle | 0 | 3* | 2 | 3 | 2- | 0 |
| _Bora | 0 | 7* | 6 | 11 | 3- | 2 |
| _Passat Estate | 0 | 6* | 5 | 10 | 1 | 6 |
| _Passat Saloon | 9 | 23* | 18 | 31 | 1- | 23 |
| _Sharan | 0 | 4* | 2 | 4 | 0 | 0 |
| Total | 11 | 98 | 64 | 140 | 17- | 58 |

CUT OFF DATE FOR ACQUISITIONS/FACTORY ORDERING 30/04/01, "*" = UNRESTRICTED

Fastpath_____Date_____Rtn__

Enter F1=Help       F3=Exit    F7_Bkwd    F12=Cancel        F13=Prev month        F14=Next month

F15=Quit    F17=Consignments    F18=Res parameters        F21=Fastpath        F22=Acq summary

# FIG. 4

EP 1 191 414 B1

Dealer . . . . . . . . : 349   Windrush Garage Limited                                    More:        +

| Model Group | Importer | | Trans-In | | Trans-Out | | Total |
|---|---|---|---|---|---|---|---|
| | Alloc | De-al | Mand | Neg | Mand | Neg | |
| _Lupo | | | | | 2- | 1- | 3- |
| _New Polo | | | 2 | 4 | 2- | 2- | 2 |
| _Polo Saloon | | | | | | 1- | 1- |
| _Polo Estate | | | | | 1- | | 1- |
| _Golf | 1 | 1- | 3 | 6 | 10- | 7- | 8- |
| _Golf SA | | | | | | | |
| _Golf Cabriolet | | | | | | | |
| _Golf Estate | | | | | 1- | | 1- |
| _Beetle | 1 | | 1 | | 3- | 1- | 2- |
| _Bora | | | 1 | | 4- | | 3- |
| _Passat Estate | | | | 1 | | | 1 |
| _Passat Saloon | 1 | | | 4 | 4- | 2- | 1- |
| _Sharan | | | | | | | |
| Total | 3 | 1- | 7 | 15 | 27- | 17- | 17- |

Fastpath_____Date_____Rtn__
F1=Help        F3=Exit     F7_Bkwd     F12=Cancel     15=Quit        F17=Non-quota managed supply
F21=Fastpath        F22=Acq summary

## FIG. 5

EP 1 191 414 B1

Dealer . . . . . . . . : 349   Windrush Garage Limited                                    More:        +

| Model Group | Restrictions | | | | Acquisitions | |
| | Stock & Transit | | Prod | | Stock & | |
| | Min | Max | Min | Max | Transit | Prod |
|---|---|---|---|---|---|---|
| _Lupo | 26 | 702* | 320 | 593 | 27 | 192 |
| _New Polo | 33 | 2007* | 2533 | 5020 | 23 | 1238 |
| _Polo Saloon | 6 | 502* | 60 | 300 | 6 | 3 |
| _Polo Estate | 6 | 486* | 54 | 276 | 2 | 7 |
| _Golf | 2 | 3019* | 1284 | 4527 | 428 | 1798 |
| _Golf SA | 0 | 19* | 8 | 0 | 0 | 0 |
| _Golf Cabriolet | 32 | 322* | 66 | 276 | 9- | 41 |
| _Golf Estate | 28 | 412* | 173 | 607 | 4 | 120 |
| _Beetle | 70 | 613* | 423 | 717 | 19 | 291 |
| _Bora | 12 | 708* | 551 | 1006 | 21 | 175 |
| _Passat Estate | 84 | 499* | 380 | 762 | 37 | 362 |
| _Passat Saloon | 153 | 996* | 1130 | 2042 | 39 | 1047 |
| _Sharan | 27 | 395* | 176 | 404 | 9- | 82 |
| Total | 479 | 10680 | 7158 | 16530 | 588 | 5356 |

CUT OFF DATE FOR ACQUISITIONS/FACTORY ORDERING 30/04/01, "*" = UNRESTRICTED

Fastpath_____Date_____Rtn__

F1=Help        F3=Exit    F8_Bkwd        F12=Cancel      F13=Prev month   F14=Next month        F15=Quit

F21=Fastpath         F22=Acq summary

## FIG. 6

EP 1 191 414 B1

National                                                          More:        +

| Model Group | Importer | | Trans-In | | Trans-Out | | Total |
| | Alloc | De-al | Mand | Neg | Mand | Neg | |
|---|---|---|---|---|---|---|---|
| _Lupo | 41 | 4- | 163 | 39 | 173- | 39- | 27 |
| _New Polo | 53 | 28- | 635 | 447 | 649- | 435- | 23 |
| _Polo Saloon | 6 | | 21 | 8 | 21- | 8- | 6 |
| _Polo Estate | 3 | 1- | 21 | 5 | 21- | 5- | 2 |
| _Golf | 517 | 71- | 546 | 524 | 576- | 512- | 428 |
| _Golf SA | 2 | 2- | | 22 | | 22- | 0 |
| _Golf Cabriolet | | | 44 | 6 | 53- | 6- | 9- |
| _Golf Estate | 13 | 7- | 52 | 23 | 54- | 23 | 4 |
| _Beetle | 27 | 8- | 105 | 113 | 108- | 110- | 19 |
| _Bora | 33 | 4- | 186 | 30 | 194- | 30- | 21 |
| _Passat Estate | 45 | 3- | 28 | 28 | 33- | 28- | 37 |
| _Passat Saloon | 50 | 9- | 130 | 130 | 134- | 128- | 39 |
| _Sharan | 2 | 2- | 31 | 24 | 40- | 24- | 9- |
| Total | 792 | 139- | 1962 | 1399 | 2056- | 1370- | 588 |

Fastpath_____Date_____Rtn__
F1=Help        F3=Exit     F7_Bkwd     F12=Cancel      F13=Prev month    F14=Next month     15=Quit
F21=Fastpath         F22=Acq summary

## FIG. 7

EP 1 191 414 B1